# EUROPEAN PATENT APPLICATION

(11) **EP 0 725 266 A1**
(43) Date of publication of application: **07.08.1996**
(21) Application number: 96200226.7
(22) Date of filing: 01.02.1996
(51) Int. Cl.: G01M 19/00, G01M 9/02

(54) **Apparatus for measuring the behavior of a selfregulating ventilating grate**

(30) Priority: 03.02.1995 NL 9500204
(71) Applicant: Zwaan, Adrianus Jacobus, NL-2252 BD Voorschoten (NL)
(72) Inventor: Leipoldt,Peter, 1053 KZ Amsterdam (NL)
(74) Representative: Smulders, Theodorus A.H.J., Ir.

(57) **Abstract**

The invention provides an apparatus with which the air velocity through (self-regulating) ventilating grates (9) can accurately be measured, without utilizing a wind tunnel, which is costly and occupies much space. The apparatus comprises a tunnel-shaped housing (1, 2, 3, 4) comprising a first compartment having an inlet opening (5) to which a ventilating fan of an adjustable speed can be connected, a measuring partition (8) disposed in transverse direction in the tunnel-shaped housing and in which a ventilating grate (9) can be fitted, and a second compartment, whose walls (1', 2', 3', 4') slant towards each other and define an outflow opening (10) whose surface area is fixedly related to the ventilating capacity of the ventilating grate to be tested, while in a wall of the first compartment at least one ventilating grate (11; 12) is disposed having an air passage opening whose size can be controlled, depending on the pressure prevailing at the inlet side of the ventilating grate to be tested, for keeping this pressure constant.

## Description

The invention relates to an apparatus for measuring the behavior of a self-regulating ventilating grate. Self-regulating ventilating grates are described in Dutch patent application 9401554 and are adapted to maintain the air flow rate through the ventilating grate constant, for instance at a value of 1m/sec, independently of the wind pressure on the facade of a building wherein the ventilating grate has been disposed. For this purpose, the ventilating grate comprises a sensor which can detect the velocity of the air flow and issue a signal representative of the flow rate of the air flow. This signal is fed to a control element, such as a servomotor, which can set the position of the air passage valve of the ventilating grate. According to Dutch standard NEN 1087:1991, such a ventilating grate should be able to maintain a constant air flow of 1m/sec. with a tolerance of 20% over a range of 1-25 Pa.

It is necessary that such self -regulating ventilating grate can be tested and adjusted in order that the flow rate of the air flow is indeed constant at the outlet side over a wide range of pressure values at the inlet side of the ventilating grate. Heretofore, the only possibility of carrying out such tests has been the utilization of a wind tunnel, wherein a varying air flow can be generated by means of ventilating fans of a large diameter which rotate at a low speed at the inlet side of a ventilating grate disposed in the wind tunnel, while at the outlet side of the grate, the magnitude of the air flow passing through the grate can be measured. However, a wind tunnel is extremely costly, occupies much space and does not belong to the normal measuring equipment of a manufacturer of ventilating grates. The use of the wind tunnels present at specialized technological institutions is also costly and does not offer the possibility of performing measurements at any desired moment.

DE-A-1648672 discloses a wind tunnel apparatus of a relatively compact construction, but which is certainly not directly suitable for testing a self-regulating ventilating grate.

Hence, the object of the invention is to provide a measuring apparatus wherein the behavior of a self-regulating ventilating grate can be measured, which measuring apparatus is on the one hand cheap to manufacture and occupies little space, and which on the other hand enables sufficiently accurate measurements all the same.

To that end, the invention provides an apparatus comprising a tunnel-shaped housing, a measuring partition disposed in a direction transverse to the passage opening of the tunnel-shaped housing and in which the ventilating grate to be tested can be fitted, the tunnel-shaped housing comprising, at one side of the measuring partition, a first compartment having an inlet opening to which a ventilating fan of an adjustable speed can be connected, and, at the other side of the measuring partition, a second compartment, of which at least two opposite walls slant towards each other and define an outflow opening whose surface area is fixedly related to the ventilating capacity (qᵥ) of the ventilating grate to be tested, while in a wall of the first compartment at least one ventilating grate is disposed having an air passage opening whose size can be controlled, depending on the pressure prevailing at the inlet side of the ventilating grate to be tested, for keeping this pressure constant.

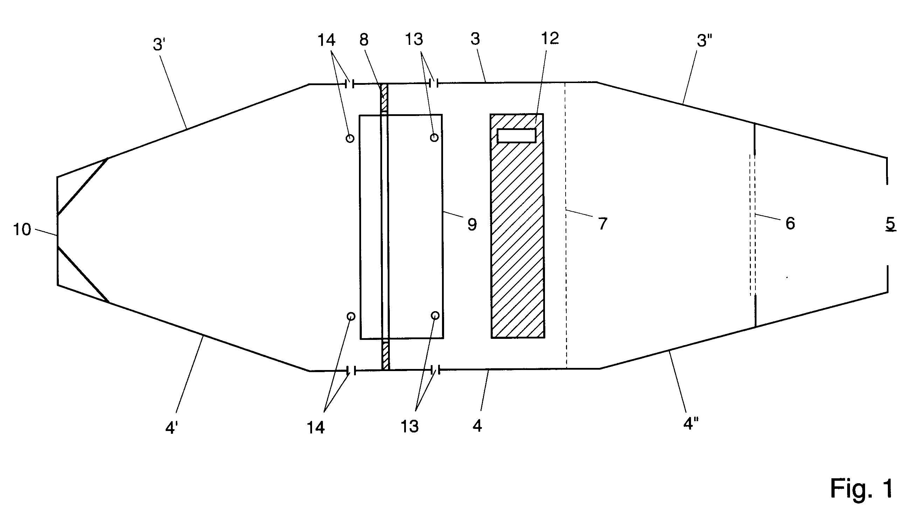

Hereinafter, the invention will be specified on the basis of an exemplary embodiment with reference to the accompanying drawings, wherein
Fig. 1 is a top plan view, in cross section, of the measuring apparatus according to the invention, having disposed therein a self-regulating ventilating grate to be tested; and

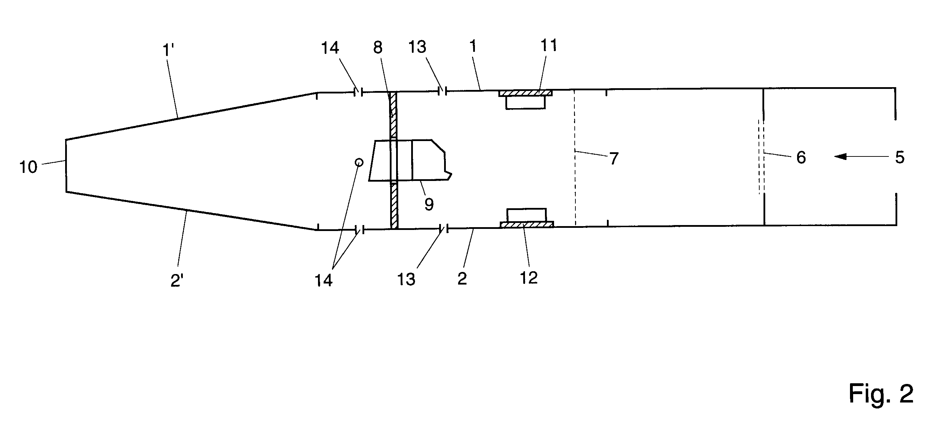

Fig. 2 is a side elevation, in section, of the apparatus according to Fig. 1.

The measuring apparatus according to the invention comprises a tunnel-shaped housing having a top wall 1, a bottom wall 2 and sidewalls 3 and 4. The sidewalls 3 and 4 slant towards each other towards the inlet side of the housing via portions 3'' and 4'' to form at that location, together with the parallel top and bottom walls 1, 2, an opening 5 for feeding, optionally via a connecting tube, an air flow generated by a ventilating fan not shown. This ventilating fan has a controllable speed so as to enable the creation of different pressure values around the ventilating grate to be measured. Provided in the housing, viewed from the opening 5, are a grate 6 having adjustable openings and a grate 7 having fixed openings. These grates are intended to feed an air flow without turbulence and at the desired pressure to the ventilating grate 9 to be tested, which ventilating grate is provided in a closed measuring partition 8 which is transversely disposed in the tunnel-shaped housing. In the exemplary embodiment, the ventilating grate 9 is shown in the form of a so-called silencer, i.e. a ventilating grate having noise-silencing provisions, but any other type of self-regulating ventilating grate can be tested in the apparatus according to the invention, when placed in the measuring partition 8. The ventilating grate is of the type shown in Dutch patent application 9401554, having at one side an inlet opening with a fixed passage and at the other side an outlet opening which can be closed to a higher or lesser extent by means of an air passage valve.

Slightly spaced from the measuring partition 8, the sidewalls 3, 4 and the top and bottom walls 1 and 2 slant towards each other via wall portions 3', 4' and 1', 2' respectively, and form an outlet opening 10. This outlet opening has an effective passage area showing a fixed relation to the ventilating capacity (qᵥ) of the ventilating grate in completely opened condition, in order that the air flow rate through the outlet opening 10 and through the inlet slot of the ventilating grate are equal to each other. The ventilating capacity qᵥ of a ventilating grate in completely open condition is expressed in dm³/sec. at an air velocity of 1 m/sec. and a pressure difference of 1 Pa over the ventilating device. The value qᵥ depends on the internal air resistance of the grate. Because measuring takes place at an air velocity of 1 m/sec., each dm³/sec. requires an effective air passage area of the grate of 10 cm². Accordingly, qᵥ = 1 corresponds to an effective area of 10 cm². This effective passage area should be equal to the effective passage area of the outlet opening 10 to enable precise measurement of the air velocity at that location. This means that the surface area of the outflow opening 10 in cm² is substantially equal to 10 qᵥ of the grate to be tested. For testing ventilating grates having air inlet openings of a different flow rate, the size of the opening 10 can be adjusted by means of inserts.

Provided in the space between the second grate 7 and the measuring partition 8 in the top and bottom walls 1 and 2 respectively are self-regulating ventilating grates 11 and 12, intended to ensure that the air pressure difference over this grate constantly remains at the set value, independently of the position of the air passage valve in the ventilating grate 9. The ventilating grates 11 and 12 are each under the control of a servomotor not further shown, which can control the opening position of the associated grate. These servomotors receive their control signal from a circuit generating a control signal from a differential pressure signal. The differential pressure signal is obtained by means of two pressure detectors, one of which measures the pressure upstream of the ventilating grate to be tested, via a number of measuring openings 13 provided in the wall of the housing upstream of the measuring partition 8 and interconnected by means of a hose, and the second one measures the pressure downstream of the ventilating grate, via a number of measuring openings 14 provided in the wall of the housing downstream of the measuring partition 8 and interconnected via a hose. Such a circuit, generating from the output signals from two pressure detectors an electric signal which is representative of a differential pressure signal, is generally known and will therefore not be further explained. The two grates 11 and 12 provide that the pressure over the grate 9 remains equal to the set value, independently of the position of the air passage valve of this grate, which set value may vary between 1 and 25 Pa, and provide that when the grate 9 closes, which would cause the pressure at the inlet side to increase, this overpressure can be discharged via grates 11 and 12. For this purpose, it is desired that the grates 11 and 12 respond to a variation in pressure more quickly than the grate 9 to be measured, since it would otherwise become disordered.

Adjacent the outlet opening, it can be determined by means of an air velocity detector whether at a varying pressure of between 1 and 25 Pa upstream of the measuring partition 8, the ventilating grate is able to constantly keep the air flow at a value of 1 m/sec. by means of variation of the position of the air passage valve. In addition, a pressure detector can also be arranged in the outflow opening to check whether the pressure at that location equals 1 Pa, which is the pressure difference at which the capacity (the flow rate) of ventilating grates should be determined according to Dutch standard NEN 1087:1991.

By way of illustration, it can further be indicated that the measuring apparatus shown in the Figures may have a length of only approximately 3 m, a width of only approximately 1 m and a height of approximately 40 cm, so that it is considerably smaller than a conventional wind tunnel and hence much cheaper to manufacture. On the other hand, it has been proved that with the apparatus according to the invention very accurate measuring results can be obtained.

## Claims

1. An apparatus for measuring the behavior of a ventilating grate, in particular a self-regulating ventilating grate (9), **characterized by** a tunnel-shaped housing (1, 2, 3, 4), a measuring partition (8) disposed in a direction transverse to the passage opening of the tunnel-shaped housing and in which the ventilating grate to be tested can be fitted, the tunnel-shaped housing comprising, at one side of the measuring partition, a first compartment having an inlet opening (5) to which a ventilating fan of an adjustable speed can be connected, and, at the other side of the measuring partition, a second compartment, of which at least two opposite walls (1', 2'; 3', 4') slant towards each other and define an outflow opening (10) whose surface area is fixedly related to the ventilating capacity (qᵥ) of the ventilating grate to be tested, while in a wall (1, 2, 3, 4) of the first compartment at least one ventilating grate (11; 12) is disposed having an air passage opening whose size can be controlled, depending on the pressure prevailing at the inlet side of the ventilating grate to be tested, for keeping said pressure constant.

2. An apparatus according to claim 1, characterized in that a ventilating grate (11; 12) is provided in the top wall (1) and the bottom wall (2) respectively of the first compartment.

3. An apparatus according to claim 1 or 2, characterized in that the surface area of the outflow opening in cm² is substantially equal to 10 qᵥ, qᵥ being the ventilating capacity of the ventilating grate to be tested, expressed in dm³/sec.

4. An apparatus according to claim 1, 2 or 3, characterized in that the air passage opening of the at least one ventilating grate (11; 12) is controlled by means of a signal obtained by comparing the air pressure at one side of the measuring partition (8) with the air pressure at the other side of the measuring partition.

5. An apparatus acccording to at least one of the preceding claims, characterized in that a pressure detector and an air velocity detector are disposed in the outlet opening.

6. An apparatus according to at least one of the preceding claims, characterized in that all walls (1', 2', 3', 4') of the second compartment slant towards the outlet opening (10).

7. An apparatus according to at least one of the preceding claims, characterized in that in the first compartment, a grate (6) having an adjustable opening and a grate (7) having a fixed opening are disposed parallel to each other, in the portion of the first compartment located between the inlet opening (5) and the ventilating grate (11, 12) in a wall of the first compartment.
